(19) Europäisches Patentamt
European Patent Office
Office européen des brevets

(11) **EP 1 339 287 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(21) Anmeldenummer: **01998147.1**

(22) Anmeldetag: **19.11.2001**

(51) Int Cl.:
*A01N 65/00* *(2006.01)*   *A01N 65/00* *(2006.01)*
*A01N 47/38* *(2006.01)*   *A01N 47/18* *(2006.01)*
*A01N 47/12* *(2006.01)*   *A01N 43/88* *(2006.01)*
*A01N 43/653* *(2006.01)*   *A01N 43/54* *(2006.01)*
*A01N 43/30* *(2006.01)*   *A01N 37/50* *(2006.01)*
*A01N 37/24* *(2006.01)*

(86) Internationale Anmeldenummer:
**PCT/EP2001/013339**

(87) Internationale Veröffentlichungsnummer:
**WO 2002/043495 (06.06.2002 Gazette 2002/23)**

(54) **FUNGIZIDE WIRKSTOFFKOMBINATIONEN**

FUNGICIDAL AGENT COMBINATIONS

COMBINAISONS DE PRINCIPES ACTIFS FONGICIDES

(84) Benannte Vertragsstaaten:
**AT BE CH CY DE DK ES FI FR GB GR IE IT LI LU MC NL PT SE TR**

(30) Priorität: **01.12.2000 DE 10059605**

(43) Veröffentlichungstag der Anmeldung:
**03.09.2003 Patentblatt 2003/36**

(73) Patentinhaber: **Bayer CropScience AG
40789 Monheim (DE)**

(72) Erfinder:
• **BARON, Gerhard
51377 Leverkusen (DE)**
• **KILIAN, Michael
51379 Leverkusen (DE)**
• **ROSENFELDT, Frank
40764 Langenfeld (DE)**

(56) Entgegenhaltungen:
**EP-A- 0 591 674     WO-A-97/12736**

**Beschreibung**

Die vorliegende Erfindung betrifft neue Wirkstoffkombinationen, die aus bekannten Extrakten aus Samen des Neem-Baumes einerseits und weiteren bekannten fungiziden Wirkstoffen andererseits bestehen, und sehr gut zur Bekämpfung von phytopathogenen Pilzen geeignet sind.

Es ist bereits bekannt, daß Extrakte aus den Samen des Neem-Baumes fungizide Eigenschaften besitzen (vgl. "The Pesticide Manual", 11th. Edition, 1997, The British Crop Protection Council, Nr. 36 und EP-A 0 436 257). Die Wirksamkeit dieser Substanz ist gut, lässt aber bei niedrigen Aufwandmengen in manchen Fällen zu wünschen übrig.

Weiterhin ist schon bekannt, dass zahlreiche Azol-Derivate, Strobilurin-Derivate und auch andere Heterocyclen zur Bekämpfung von Pilzen eingesetzt werden können (vgl. EP-A 0 040 345, EP-A 0 281 842, EP-A 0 339 418, EP-A 0 382 375 und WO 96-16 048). Auch die Wirkung dieser Stoffe ist aber bei niedrigen Aufwandmengen nicht immer befriedigend.

Es wurde nun gefunden, dass die neuen Wirkstoffkombinationen, bestehend aus

A) Extrakten aus Samen des Neem-Baumes
und

B) einem Wirkstoff aus der Gruppe der Triazol-Derivate, bestehend aus

    (1) Tebuconazole,
    (2) Triadimenol,
    und
    (4) 2-[2-(1-Chlor-Cyclopropyl)-3-(2-chlor-phenyl)-2-hydroxy-propyl]-2,4-dihydro-[1,2,4]-triazol-3-thion

oder

C) einem Wirkstoff aus der Gruppe der Benzimidazol-Derivate, bestehend aus

    (5) Benomyl,
    (6) Carbendazim und

oder

D) einem Wirkstoff aus der Gruppe der Strobilurin-Derivate, bestehend aus

    (7) Azoxystrobin,
    (8) Kresoxim-methyl,
    (9) Trifloxystrobin und
    (10)   3-[1-(2-[4-(2-Chlorphenoxy)-5-fluorpyrimid-6-yloxy]-phenyl)-1-(methoximino)-methyl]-5,6-dihydro-1,4,2-dioxazin

oder

(E) einem Wirkstoff aus der Gruppe, bestehend aus

    (11) Spiroxamine,
    (12) Fenhexamid und
    (13) Iprovalicarb,

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Unter Extrakten aus Samen des Neem-Baumes sind im vorliegenden Fall alle üblichen aus den Samen des Neem-Baumes durch Extraktion oder Auspressen isolierbaren Produkte zu verstehen, die wesentliche Mengen an Azadirachtin enthalten. Zu diesen Produkten gehört auch Azadirachtin selbst.

Die verschiedenen Extrakte aus Samen des Neem-Baumes und auch Azadirachtin selbst sind bereits bekannt (vgl. "The Pesticide Manual" 11th. Edition, British Crop Protection Council 1997, Nr. 36 sowie "Römpp Chemie Lexikon", 9. Auflage, Seite 2954, Georg Thieme Verlag, Stuttgart-New York, 1991).

Die in den erfindungsgemäßen Wirkstoffkombinationen neben den Extrakten aus den Samen des Neem-Baumes enthaltenen, fungizid wirksamen Komponenten sind ebenfalls bekannt. Im einzelnen werden in "The Pesticide Manual" 11th. Edition, British Crop Protection Council, 1997, die folgenden Stoffe beschrieben, und zwar

| (1) | Tebuconazole | unter Nr. | 678, |
|-----|--------------|-----------|------|
| (2) | Triadimenol | unter Nr. | 721, |
| (5) | Benomyl | unter Nr. | 60, |
| (6) | Carbendazim | unter Nr. | 107, |
| (7) | Azoxystrobin | unter Nr. | 43, |
| (8) | Kresoxim-methyl | unter Nr. | 439 und |
| (11) | Spiroxamine | unter Nr. | 441. |

Die übrigen oben genannten Wirkstoffe werden in den folgenden Publikationen beschrieben:

| (4) | Triazol-Derivat | WO 96-16 048, |
|-----|-----------------|---------------|
| (9) | Trifloxystrobin | EP-A 0 460 575, |
| (10) | Strobilurin-Derivat der Formel (III) | EP-A 0 882 043. |
| (12) | Fenhexamid | EP-A 0 339 418 und |
| (13) | Iprovalicarb | EP-A 0 472 996. |

Die erfindungsgemäßen Wirkstoffkombinationen enthalten neben dem Extrakt aus den Samen des Neem-Baumes mindestens einen der Wirkstoffe aus den Gruppen (B) bis (E). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Extrakt aus Samen des Neem-Baumes

0,1 bis 25 Gewichtsteile, vorzugsweise 0,2 bis 20 Gewichtsteile an Wirkstoff aus der Gruppe (B),

0,1 bis 50 Gewichtsteile, vorzugsweise 0,2 bis 40 Gewichtsteile an Wirkstoff aus der Gruppe (C),

0,1 bis 25 Gewichtsteile, vorzugsweise 0,2 bis 20 Gewichtsteile an Wirkstoff aus der Gruppe (D) oder

1 bis 60 Gewichtsteile, vorzugsweise 20 bis 50 Gewichtsteile an Wirkstoff aus der Gruppe (E).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Echten und Falschen Mehltaupilzen, von Blattfleckenerregern und Rost, wie Sphaerotheca, Septoria und Puccinia. Außerdem lassen sie sich auch mit gutem Erfolg gegen bodenbürtige Pilze, wie Fusarium, Pythium und Rhizoctonia einsetzen.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen werden üblicherweise in Form von Mitteln (Formulierungen) eingesetzt, zu deren Herstellung

- die Extrakte aus Samen des Neem-Baumes in handelsüblicher Zubereitung oder in Form von isolierten Substanzen und

- die Wirkstoffe aus den Gruppen (B) bis (F) entweder als solche oder in handelsüblichen Zubereitungen

verwendet werden können.

Dabei können die erfindungsgemäßen Wirkstoffkombinationen in die üblichen Mittel (Formulierungen) überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver, Granulate und Formkörper, angewendet werden. Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen, Inkrustieren, Implantieren oder Injizieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 20 und 5000 g/ha, vorzugsweise zwischen 30 und 1000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 20 und 5000 g/ha, vorzugsweise zwischen 30 und 1000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X    den Wirkungsgrad beim Einsatz des Wirkstoffes A in einer Aufwandmenge von $m$ g/ha bedeutet,

Y    den Wirkungsgrad beim Einsatz des Wirkstoffes B in einer Aufwandmenge von $n$ g/ha bedeutet und

E    den Wirkungsgrad beim Einsatz der Wirkstoffe A und B in Aufwandmengen von $m$ und $n$ g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, daß kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht.

## Beispiele

**Sphaerotheca-Test** Rosen/kurativ

Zur Herstellung einer zweckmäßigen Wirkstoffzubereitung vermischt man eine handelsübliche Formulierung von Wirkstoff oder Wirkstoffkombination mit Wasser bis zum Erreichen der gewünschten Konzentration.

Zur Prüfung auf kurative Wirksamkeit werden Rosen, die mit Sphaerotheca pannosa infiziert sind, im Abstand von jeweils 7 Tagen dreimal mit der Wirkstoffzubereitung in der angegebenen Aufwandmenge besprüht. Die Pflanzen werden bei Temperaturen zwischen 15°C und 23°C und einer relativen Luftfeuchtigkeit von ca. 70 % im Gewächshaus aufgestellt.

Die Auswertung erfolgt 10 bzw. 20 Tage nach der dritten Behandlung. Dabei bedeutet 0 % ein Wirkungsgrad, der demjenigen der Kontrolle entspricht, während ein Wirkungsgrad von 100 % bedeutet, dass kein Befall beobachtet wird.

Wirkstoffe, Aufwandmengen und Versuchsergebnisse gehen aus der folgenden Tabelle hervor.

## Tabelle 1

**Sphaerotheca-Test**  Rosen/kurativ

| Wirkstoff | Aufwandmenge an Wirkstoff in g/ha | Wirkungsgrad in % 10 Tage nach der dritten Behandlung | | Wirkungsgrad in % 20 Tage nach der dritten Behandlung | |
|---|---|---|---|---|---|
| Bekannt: | | | | | |
| Neem-Extrakt*) | 40 | 10,3 | | 3,6 | |
| Tebuconazole | 100 | 28,6 | | 26,6 | |
| Erfindungsgemäß: | | gef. | ber.**) | gef. | ber.**) |
| Neem-Extrakt* + Tebuconazole | 40 + 100 | 47,2 | 36,0 | 44,3 | 29,2 |

*) Es wurde Neem-Baum-Samenextrakt eingesetzt, der unter der Bezeichnung Neem-Azal® (Firma Trifolio) im Handel ist.

**) gef. = gefundene Wirkung

ber. = nach der Colby-Formel berechnete Wirkung

**Patentansprüche**

1. Fungizide Mittel, **gekennzeichnet durch** einen Gehalt an einer Wirkstoffkombination bestehend aus

A) Extrakten aus Samen des Neem-Baumes
und
B) einem Wirkstoff aus der Gruppe der Triazol-Derivate, bestehend aus

(1) Tebuconazole,
(2) Triadimenol, und
(4) 2-[2-(1-Chlor-cyclopropyl)-3-(2-chlor-phenyl)-2-hydroxy-propyl]-2,4-dihydro-[1,2,4]-triazol-3-thion

oder
C) einem Wirkstoff aus der Gruppe der Benzimidazol-Derivate, bestehend aus

(5) Benomyl,

(6) Carbendazim und

oder

D) einem Wirkstoff aus der Gruppe der Strobilurin-Derivate, bestehend aus

(7) Azoxystrobin,
(8) Kresoxim-methyl,
(9) Trifloxystrobin und
(10)    3-[1-(2-[4-(2-Chlorphenoxy)-5-fluorpyrimid-6-yloxy]-phenyl)-1-(methoximino)-methyl]-5,6-dihydro-1,4,2-dioxazin

oder

(E) einem Wirkstoff aus der Gruppe, bestehend aus

(11) Spiroxamine,
(12) Fenhexamid und
(13) Iprovalicarb,

sowie Streckmitteln und/oder oberflächenaktiven Stoffen.

**2.** Mittel gemäß Anspruch 1, **dadurch gekennzeichnet, dass** in den WirkstoffKombinationen das Gewichtsverhältnis von Extrakt aus Samen des Neem-Baumes zu

- Wirkstoff der Gruppe (B) zwischen 1:0,1 und 1:25 liegt,
- Wirkstoff der Gruppe (C) zwischen 1:0,1 und 1:50 liegt,
- Wirkstoff der Gruppe (D) zwischen 1:0,1 und 1:25 liegt und
- Wirkstoff der Gruppe (E) zwischen 1:1 und 1:60 liegt.

**3.** Nicht-therapeutisches Verfahren zur Bekämpfung von Pilzen, **dadurch gekennzeichnet, daß** man Wirkstoffkombinationen gemäß Anspruch 1 auf die Pilze und/oder deren Lebensraum ausbringt.

**4.** Nicht-therapeutische Verwendung von Wirkstoffkombinationen gemäß Anspruch 1 zur Bekämpfung von Pilzen.

**5.** Verfahren zur Herstellung von fungiziden Mitteln, **dadurch gekennzeichnet, daß** man Wirkstoffkombinationen gemäß Anspruch 1 mit Streckmitteln und/oder oberflächenaktiven Stoffen vermischt.

**6.** Mittel gemäß Anspruch 1 oder 2 **gekennzeichnet durch** einen Gehalt an einer Wirkstoffkombination bestehend aus

A) Extrakten aus Samen des Neem-Baumes
und
B) (1) Tebuconazole.

## Claims

**1.** Fungicidal compositions, **characterized in that** they comprise an active compound combination comprising

A) extracts from seeds of the Neem tree
and
B) an active compound from the group of the triazole derivatives, consisting of

(1) tebuconazole,
(2) triadimenole,
and
(4) 2-[2-(1-chlorocyclopropyl)-3-(2-chlorophenyl)-2-hydroxypropyl]-2,4-dihydro[1,2,4]triazole-3-thione

or
C) an active compound from the group of the benzimidazole derivatives, consisting of

(5) benomyl,
(6) carbendazim and

or
D) an active compound from the group of the strobilurin derivatives, consisting of

(7) azoxystrobin,
(8) kresoxime-methyl,
(9) trifloxystrobin and
(10)   3-[1-(2-[4-(2-chlorophenoxy)-5-fluoropyrimid-6-yloxy]phenyl)-1-(methoximino)methyl]-5,6-dihydro-1,4,2-dioxazine

or
(E) an active compound from the group consisting of

(11) spiroxamine,
(12) fenhexamide and
(13) iprovalicarb,

and extenders and/or surfactants.

2.  Compositions according to Claim 1, **characterized in that** in the active compound combinations the weight ratio of extract from seeds of the Neem tree to

- active compound of group (B) is from 1:0.1 to 1:25,
- active compound of group (C) is from 1:0.1 to 1:50,
- active compound of group (D) is from 1:0.1 to 1:25 and
- active compound of group (E) is from 1:1 to 1:60.

3.  Non-therapeutic method for controlling fungi, **characterized in that** active compound combinations according to Claim 1 are applied to the fungi and/or their habitats.

4.  Non-therapeutic use of active compound combinations according to Claim 1 for controlling fungi.

5.  Process for preparing fungicidal compositions, **characterized in that** active compound combinations according to Claim 1 are mixed with extenders and/or surfactants.

6.  Compositions according to Claim 1 or 2, **characterized in that** they comprise an active compound combination comprising

A) extracts from seeds of the Neem tree
and
B) (1) tebuconazole.

**Revendications**

1.  Agents fongicides **caractérisés en ce qu'**ils contiennent une combinaison de principes actifs se composant

A) d'extraits des graines du margousier
et
B) d'un principe actif appartenant au groupe des dérivés triazoliques, constitué de

(1) tébuconazole,
(2) triadiménol,
et de
(4) 2-[2-(1-chlorocyclopropyl)-3-(2-chlorophényl)-2-hydroxypropyl]-2,4-dihydro-[1,2,4]-triazol-3-thione

ou

C) d'un principe actif appartenant au groupe des dérivés benzimidazoliques, constitué de

    (5) bénomyle,
    (6) carbendazime et

ou

D) d'un principe actif appartenant au groupe des dérivés de strobilurine, constitué de

    (7) azoxystrobine,
    (8) krésoxim-méthyl,
    (9) trifloxystrobine et
    (10)  3-[1-(2-[4-(2-chlorophénoxy)-5-fluoropyrimid-6-yloxy]-phényl)-1-(méthoximino)-méthyl]-5,6-dihydro-1,4,2-dioxazine

ou

(E) d'un principe actif appartenant au groupe constitué de

    (11) spiroxamine,
    (12) fenhexamide et
    (13) iprovalicarbe,

ainsi que de diluants et/ou de substances tensioactives.

2.   Agents selon la revendication 1, **caractérisés en ce que** dans les combinaisons de principes actifs, le rapport en poids entre l'extrait des graines du margousier et

    - le principe actif du groupe (B) est compris entre 1:0,1 et 1:25,
    - le principe actif du groupe (C) est compris entre 1:0,1 et 1:50
    - le principe actif du groupe (D) est compris entre 1:0,1 et 1:25 et
    - le principe actif du groupe (E) est compris entre 1:1 et 1:60.

3.   Procédé non thérapeutique de lutte contre les champignons, **caractérisé en que** l'on applique les combinaisons de principes actifs selon la revendication 1 sur les champignons et/ou leur habitat.

4.   Procédé d'utilisation non thérapeutique des combinaisons de principes actifs selon la revendication 1 pour lutter contre les champignons.

5.   Procédé de préparation d'agents fongicides, **caractérisé en ce que** l'on mélange des combinaisons de principes actifs selon la revendication 1 avec des diluants et/ou des substances tensioactives.

6.   Agents selon la revendication 1 ou 2, **caractérisés en ce qu'**ils contiennent une combinaison de principes actifs se composant

    A) d'extraits des graines du margousier
    et
    B) (1) de tébuconazole.